# EUROPÄISCHE PATENTANMELDUNG

(11) **EP 0 826 547 A2**
(43) Veröffentlichungstag der Anmeldung: **04.03.1998**
(21) Anmeldenummer: 97113925.8
(22) Anmeldetag: 13.08.1997
(51) Int. Cl.: B60L 3/00

(54) **Schienentriebfahrzeug**

(30) Priorität: 24.08.1996 DE 19634220
(71) Anmelder: ABB Daimler-Benz Transportation (Deutschland) GmbH, 16761 Hennigsdorf (DE)
(72) Erfinder: Guthörl, Peter, 16761 Hennigsdorf (DE)
(74) Vertreter: Breiter, Achim, Dipl.-Ing.

(57) **Zusammenfassung**

Ein gleichstrombetriebenes Schienenfahrzeug weist an einem Fahrzeugkörper 6 wenigstens ein damit elektrisch verbundenes Schienenrad 2 und wenigstens ein dem gegenüber elektrisch isoliertes weiteres Schienenrad 3 auf. Über dieses weitere Schienenrad 3 fließen Betriebsströme aus einer Betriebsstromschaltung 9 die aus einer Fahrleitung 12 elektrisch gespeist wird. Um dabei die Berührungsspannung zwischen Fahrzeugkörper 6 und der durch die Schiene 1 gegebenen Bahnerde gering zu halten, wenn eine Berührung zwischen Fahrzeugkörper 6 und Fahrdraht 12 eintritt, ist der Fahrzeugkörper 6 zusätzlich über eine Gleichrichteranordnung 13 an die dem weiteren Schienenrad 3 zugeordnete Betriebsstromrückführung 8 und damit an Bahnerde angeschaltet, während Betriebsströme oder ein Kurzschlußstrom in der Betriebsstromschaltung infolge der Gleichrichteranordnung 13 keine Rückwirkungen auf den Fahrzeugkörper 6 ausüben.

## Beschreibung

Die Erfindung betrifft ein Schienentriebfahrzeug gemaß dem Oberbegriff des ersten Anspruchs.

Es ist bei elektrischen Schienentriebfahrzeugen ganz allgemein bekannt, einen elektrisch leitenden Fahrzeugkörper auf mehreren Schienenrädern aufzubauen und die elektrische Stromversorgung über einen einpoligen Stromabnehmer, der eine Betriebsstromschaltung mit Antriebsmotoren und Steuerschaltungen speist, wobei die Betriebsstromschaltung über eine vom Fahrzeugkörper elektrisch isolierte Betriebsstromrückführung und wenigstens ein zugeordnetes, elektrisch in Serie geschaltetes Schienenrad mit Bahnerde verbunden ist.Die Bahnerde wird dabei durch die elektrisch leitende/n Schiene/n gebildet, auf welchen die elektrisch leitenden Schienenräder laufen. Der Fahrzeugkörper ist seinerseits mit einer elektrischen Schutzerdungsverbindung ausgestattet, die über wenigstens ein eigenes Schienenrad ebenfalls mit Bahnerde verbunden ist. Die Schutzerdungsverbindung und auch die Betriebsstromrückführung sind über getrennte, elektrische Schleif- oder Rollkontakte zumindest mit dem metallischen bzw. elektrisch leitenden Laufring der betreffenden Schienenräder verbunden. Außerdem ist zwischen die Betriebsstromrückführung und die Schutzerdungsverbindung ein elektrischer Widerstand geschaltet bzw besteht hier eine direkte Verbindung zwischen Betriebsstromrückführung und Schutzerdverbindung. Von Nachteil ist bei dieser Anordnung, daß bei einem Erdschluß, bei dem eine Berührung zwischen der elektrischen Fahrleitung und dem Fahrzeugkörper auftritt, der dann fließende Erdschlußstrom zwar teilweise auch über den elektrischen Widerstand und die Betriebsstromrückführung einschließlich der zugeordneten Raderdkontakte gegen Bahnerde abfließt, jedoch muß der Hauptteil der Erdschlußstroms über die der Schutzerdverbindung zugeordnete Schienenradanordnung abfließen. Die hier unvermeidlichen Übergangswiderstände können noch zu Spannungsabfällen zwischen dem Fahrzeugkörper und Bahnerde führen, die eine Gefährdung von Personen beim Ein- oder Aussteigen nach sich ziehen können. In analoger Weise kann auch ein in der Betriebsstromschaltung auftretender Kurzschluß und der damit verbundene Spannungsabfall an den der Betriebsstromrückführung zugeordneten Schienenrädern einen Stromfluß über den Verbindungswiderstand bewirken, der infolge des Übergangswiderstandes an den der Schutzerdungsverbindung zugeordneten Schienenrädern zu einer Anhebung des Spannungspotentials am Fahrzeugkörper auf ein nicht vernachlässigbares Spannungspotential führt.

Aufgabe der Erfindung ist es daher, bei einem Schienentriebfahrzeug gemäß dem Oberbegriff des ersten Anspruchs Maßnahmen zu treffen, durch welche sowohl im Erdschlußfall wie im Kurzschlußfall eine Verminderung der Berührungsspannung zwischen dem Fahrzeugkörper und Bahnerde erreicht wird.

Die Losung dieser Aufgabe erfolgt gemäß der Erfindung durch die kennzeichnenden Merkmale des ersten Anspruchs.

Bei einer Ausgestaltung eines Schienentriebfahrzeugs gemaß der Erfindung fließt bei einer Berührung des Fahrzeugkörpers mit der Hochspannung führenden Gleichstrom-Fahrleitung ein Erdschlußstrom von der Schutzerdungsverbindung sowohl über die elektrisch unmittelbar daran angeschlossene Schienenradanordnung als auch über den in diesem Falle in Durchlaßrichtung betriebenen und damit sehr niederohmigen Gleichrichter zur Betriebsstromrückführung und über deren zugeordnete Schienenradanordnung gegen Bahnerde. Dadurch sind alle Übergangswiderstände der Raderdkontakte beider Schienenradanordnungen elektrisch parallel geschaltet und der Fahrzeugkörper dadurch äußerst niederohmig mit Bahnerde verbunden. Am Fahrzeugkörper können daher bei Erdschluß nur kleine Berührungsspannungen entstehen, die zu keiner Gefährdung von Personen führen.

Tritt dagegen ein Kurzschluß in der über einen Stromabnehmer gespeisten Betriebsstromschaltung auf, dann kann dieser Kurzschlußstrom nur über die zugeordnete Betriebsstromrückführung und über die Übergangswiderstände der Raderdkontakte der dieser Betriebsstromrückführung zugeordneten Schienenradanordnung abfließen, weil der an die Schutzerdungsverbindung angeschlossene Gleichrichter in diesem Falle in Sperrichtung betrieben wird und Kurzschlußstromanteile von der Schutzerdungsverbindung und damit vom Fahrzeugkörper vollkommen ferngehalten werden. Im Kurzschlußfall entsteht somit am Fahrzeugkörper keine durch den Kurzschlußstrom erzeugte Berührungsspannung. Dies trifft auch auf übliche Betriebsströme zu, die infolge des Gleichrichters nur über die zugeordnete Schienenradanordnung abfließen können.

Das Gleichrichterelement ist vorzugsweise als Halbleiterdiode für hohe Ströme ausgebildet und besteht vorzugsweise aus mehreren elektrisch parallel geschalteten Einzeldioden. Die Stromtragfähigkeit des Gleichrichters ist in elektrischer wie in thermischer Hinsicht so zu wählen, daß seine Funktionsfähigkeit auch dann gegeben ist, wenn die der Schutzerdungsverbindung zugeordnete Schienenradanordnung nur einen geringen Anteil des Erdschlußstromes gegen Bahnerde ableitet und der Erdschlußstrom daher zumindest weitgehend über den Gleichrichter zur der der Betriebsstromrückführung zugeordneten Schienenradanordnung fließt. Die Verlustleistung des Gleichrichters muß daher so groß sein, daß seine Betriebsfunktion zumindest bis zum Auslösen eines im Fahrleitungsnetz übergeordneten Überstromschutzes gegeben ist. Beim Auftreten eines Kurzschlusses in der Betriebsstromschaltung wird der Gleichrichter in Sperrichtung beaufschlagt und muß daher eine Spannungsfestigkeit aufweisen, die dem Spannungspotential entspricht, welches die Betriebsstromrückführung gegenüber Bahnerde maximal annimmt.

Die Erfindung ist nachfolgend anhand der Prinzipsskizze eines Ausführungsbeispiels näher erläutert.

Auf einem Paar elektrisch geerderter und als Bahnerde wirkenden elektrisch leitenden Schienen 1 stehen Schienenräder 2 bzw. 3 auf, bei welchem zumindest der Radlaufkranz elektrisch leitend ist und mit einem als Schleif- oder Rollkontakt ausge-bildeten Raderdkontakt 4 in elektrisch leitender Verbindung steht, Wobei der gesammte elektrische Übergangswiderstand jeweils durch ein Widerstandselement 5 symbolisiert ist. (Die Schienenräder 2 bzw. 3 sind jeweils paarig angeordnet und laufen auf den zugeordneten Schienen 1 des betreffenden Schienenpaares.) Die Schienenräder 2 und deren Raderdkontakte mit den Übergangswiderstanden 5 bilden dabei eine Schienenradanordnung, die elektrisch mit einem Fahrzeugkörper 6 über eine Schutzerdverindung 7 verbunden sind, wobei der Fahrzeugkörper 6 zumindest teilweise elektrisch leitende, manuell berührbare Bauteile aufweist.Die Schienenradanordnung mit den Schienenrädern 3 und den zugeordneten Raderdkontakten 5 ist dagegen elektrisch gegenüber dem Fahrzeugkörper 6 isoliert, wobei die Übergangswiderstände mit einer Betriebsstromrückführung 8 elektrisch leitend verbunden sind, die alle gegen Bahnerde abzuleitenden Ströme einer Betriebsstromschaltung 9 führt. Die Betriebsstromschaltung umfaßt neben Antriebsmotoren für die Fortbewegung des die Schienenräder 2, 3 und den Fahrzeugkörper umfassenden Schienenfahrzeugs auch Heizstrom- und Beleuchtungsstromkreise und dergleichen für ein Schienenfahrzeug notwendige elektrische Einrichtungen. Diese Betriebsstromschaltung 9 ist über einen Hauptschalter 10 und einen Stromabnehmer 11 mit einer Gleichspannung führenden Fahrleitung 12 elektrisch verbunden. Das Betriebsspannungspotential der Fahrleitung liegt beispielsweise bei 1500 Volt.

Für die Sicherheit der Benutzer eines in dieser Weise aufgebauten elektrisch angetriebenen Schienenfahrzeugs ist es wichtig, daß im Fehlerfalle am Fahrzeugkörper gegenüber Bahnerde keine Berührungsspannung auftritt, die zu einer Personengefährdung führt.Ein Fehlerfall ist beispielsweise dann gegeben, wenn bei einem Bruch der Fahrleitung 12 die Fahrleitung auf den Fahrzeugkörper 6 fällt. Der dabei auftretende sehr hohe Kurzschlußstrom, der beispielsweise einige Kiloampere erreichen kann, erzeugt an den Übergangswiderständen 5 des oder der der Schutzerdverindung 7 zugeordneten Schienenräder 2 einen Spannungsabfall, der die zulässige Berührungsspannung überschreiten kann. Um hier eine erhöhte Sicherheit zu erzielen, ist die Schutzerdungsverbindung 7 über einen Gleichrichter 13 mit der Betriebsstromrückführung 8 elektrisch verbunden. Der Gleichrichter 13 ist dabei in Stromflußrichtung so gepolt, daß zumindest Teilströme im Erdschlußfall von der Schutzerdungsverbindung 7 zur Betriebsstromrückführung 8 und über die dort parallel geschalteten Übergangswiderstände 5 gegen Bahnerde abfließen können.

Im Erdflußfall sind also die Übergangswiderstände 5 aller die Schienenräder 2 und 3 umschließenden Schienenradanordnungen elektrisch parallel geschaltet. Die Schienenräder 3 sind dabei vorzugsweise in einem oder mehreren Triebdrehgestellen angeordnet und gegenüber dem Fahrzeugkörper 6 isoliert, wenn von der Verbindung über die Gleichrichteranordnung 13 abgesehen wird. Die im Erdschlußfall über die Gleichrichter-anordnung 13 zusätzlich parallel geschalteten Übergangswider-stände 5 der die Schienenräder 3 umschließenden Schienenrad-anordnung stellen daher auch unter ungünstigen Betriebsbe-dingungen einen sehr geringen Gesamtwiderstand dar, der jedenfalls die Verringerung von Berührungsspannungen zwischen Fahrzeugkörper und Bahnerde bei Erdschluß auf ungefährliche Werte sicherstellt.

Tritt hingegen in der Betriebsstromschaltung 9, die insgesamt gegenüber dem Fahrzeugkörper 6 elektrisch isoliert ist, ein Kurzschluß auf, dann wird der daraus resultierende Kurzschlußstrom ausschließlich über die der Betriebsstromrückführung 8 zugeordneten Schienenräder 3 der betreffenden Schienenradanordnung gegen Bahnerde, also in die Schienen 1 abgeleitet. Die Gleichrichteranordnung 13 wird diesem Falle von der an den Übergangswiderständen 5 der Schienenräder 3 abfallenden Spannung in Sperrichtung beaufschlagt, so daß aus der Betriebsstromrückführung kein Anteil des Kurzschlußstroms zur Schutzerdungsverbindung 7 und damit zum Fahrzeugkörper 6 fließen kann. Am Übergangswiderstand 5 der betreffenden Schienenräder 2 entsteht dadurch kein die Berührungsspannung beeinträchtigender Spannungsabfall. Im Kurzschlußfall und auch im normalen Betriebsfall verhindert daher die Gleichrichteranordnung 13 eine stromleitende Verbindung zur Schutzerdungsverbindung 7. Die Gleichrichteranordnung 13, die als einfacher Einweggleichrichter ausgebildet werden kann, ist vorzugsweise durch eine oder mehrere parallel geschaltete Halbleiterdioden gebildet, die zur Führung des Erdschlußstromes über eine Zeitdauer geeignet ist, die bis zum Auslösen des der Fahrleitung zugeordneten Überstromschutzes, beispielsweise eines Unterverkschalters dauert.

Insgesamt ergibt sich somit, daß Erdschlußströme auf viele parallel geschaltete Raderdkontakte verteilt werden und sich dadurch ein geringer Spannungsabfall an den Übergangswiderständen bzw. am Fahrzeugkörper 6 aufbaut, während eine Spannungsrückwirkung beim Auftreten von Betriebs- oder Kurzschlußströmen durch die Gleichrichteranordnung 13 auf dem Fahrzeugkörper 6 völlig verhindert ist. Dabei ist bei Fahrzeugen mit Zugsammelschiene, über die Verbraucher z.B.in anderen angehängten Wagen gespeist werden und für deren Strom die Fahrschiene 1 die Rückleitung bildet, ein Stromfluß über das Schienenrad 2 und den zugeordneten Raderdkontakt 4 bzw. den Übergangswiderstand 5 zur Schutzerdungsverbindung 7 hin und weiter über die Diode 13 nicht zu erwarten, da die Durchlaßspannung der Diode in Stromflußrichtung überschritten werden müßte.

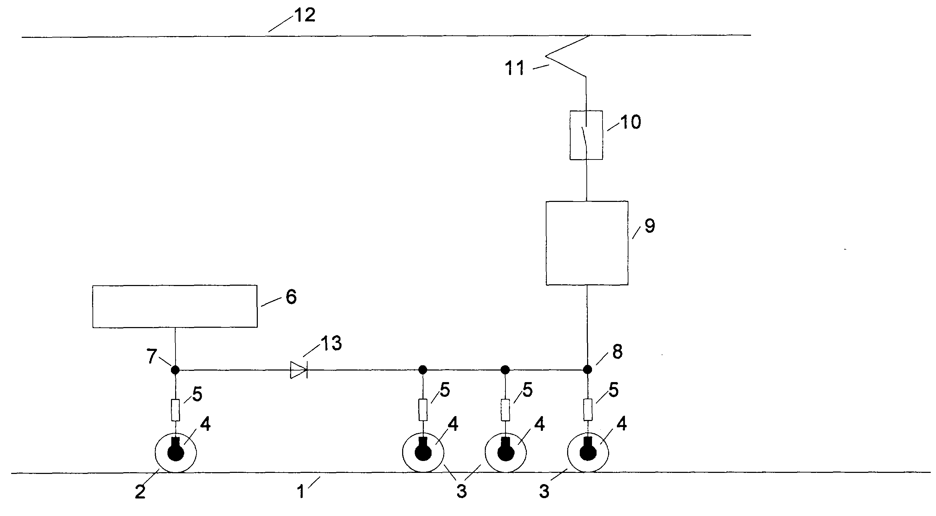

## Patentansprüche

1. Elektrisches Schienentriebfahrzeug für Gleichstrombetrieb mit einem elektrisch leitenden, mehrere Schienenräder aufweisenden Fahrzeugkörper und einem einpoligen Stromabnehmer, der eine Betriebsstromschaltung speist, welche über eine vom fahrzeugkörper elektrisch isolierte Betriebsstromrückführung und wenigstens ein zugeordnetes, elektrisch in Serie geschaltetes Schienenrad mit Bahnerde verbunden ist und mit einer elektrischen Schutzerdungsverbindung am Fahrzeugkörper, die über wenigstens ein eigenes Schienenrad mit Bahnerde verbunden ist, welche durch die elektrisch leitende/n Schiene/n gebildet ist, sowie mit einem elektrischen Schaltelement, das zwischen die Betriebsstromrückführung und die Schutzerdungsverbindung geschaltet ist, dadurch gekennzeichnet, daß das Schaltelement (13) ein elektrisches Gleichrichterelement ist, das in Stromflußrichtung von der Schutzerdungsverbindung (7) zur Betriebsstromrückführung (8) gepolt ist.

2. Schienenfahrzeug nach Anspruch 1, dadurch gekennzeichnet, daß das Schaltelement (13) eine Hochstrom-Halbleiterdiode ist.

3. Schienenfahrzeug nach Anspruch 1 oder 2, dadurch gekennzeichnet, daß das Schaltelement (13) mehrere Halbleiterdioden in elektrischer Parallelschaltung aufweist.

4. Schienenfahrzeug nach Anspruch 1 oder einem der folgenden, dadurch gekennzeichnet, daß das Gleichrichterelement (13) elektrisch und thermisch derart bemessen ist, daß seine Betriebsfunktion bei Führen des maximal im Versorgungsnetz auftretenden Erdschlußstroms bis zum Auslösen eines im Fahrleitungsnetz übergeordneten Überstromschutzes gegeben ist.

5. Schienenfahrzeug nach Anspruch 1 oder einem der folgenden, dadurch gekennzeichnet, daß die Sperrspannung des Gleichrichters (13) wenigstens der Summe der elektrischen Spannungsabfälle entspricht, die in der Betriebsstromführung (8) und an dem zugeordneten Schienenrad (3) bei einem maximalen Kurzschlußstrom in der Betriebsstromschaltung (8) auftritt.
